# EUROPÄISCHE PATENTSCHRIFT

(11) **EP 3 185 969 B1**
(45) Veröffentlichungstag und Bekanntmachung des Hinweises auf die Patenterteilung: **26.07.2023**
(21) Anmeldenummer: 15778207.9
(22) Anmeldetag: 25.08.2015
(51) Int. Cl.: A62B 9/04, B05B 7/24

(54) **BEFESTIGUNGSEINHEIT UND MODULE**
FASTENING UNIT AND MODULES
UNITÉ DE FIXATION ET MODULES

(30) Priorität: 26.08.2014 CN 201420486205 U; 26.08.2014 CN 201420486168 U; 26.08.2014 CN 201420486221 U
(43) Veröffentlichungstag der Anmeldung: 05.07.2017
(73) Patentinhaber: SATA GmbH & Co. KG, 70806 Kornwestheim (DE)
(72) Erfinder: BROSE, Jens, 74354 Ottmarsheim (DE); GEHRUNG, Ralf, 70192 Stuttgart (DE)
(86) Internationale Anmeldenummer: PCT/EP2015/001728
(87) Internationale Veröffentlichungsnummer: WO 2016/030011

(56) Entgegenhaltungen:
- EP-A2- 0 747 095
- WO-A1-00/77469
- WO-A1-01/97914
- WO-A1-2009/048584
- WO-A2-2014/012064
- US-A- 3 949 966
- US-A1- 2003 160 075
- US-A1- 2006 032 647
- US-A1- 2006 065 261
- US-A1- 2007 023 468
- US-A1- 2008 203 124
- US-A1- 2008 257 928
- US-B1- 8 584 916

## Beschreibung

### Technisches Gebiet

Die vorliegende Erfindung bezieht sich auf eine Befestigungseinheit, insbesondere eine Befestigungseinheit für Module, die zur Versorgung eines Benutzers einer Atemschutzmaske oder Atemschutzhaube mit Atemluft bestimmt sind, sowie auf solche Module.

### Technologischer Hintergrund

Während Lackierverfahren, die mittels Spritzpistolen, die mit Druckluft und unter Verwendung von Lösungsmitteln betrieben werden, es unvermeidlich, dass ein sogenannter "Overspray" anfällt. Das heißt, dass der Betriebsraum mit einer unerwünschten Menge von Farbe oder Lacktröpfchen belastet wird, was auch sehr schädlich für den menschlichen Körper ist. Aus diesem Grund ist ein Gesundheitsschutz für den Arbeiter notwendig. Atemschutzhauben, die vorzugsweise über dem gesamten Kopf und insbesondere vor dem gesamten Gesichtsbereich des Arbeiters befestigt werden können, sind für diesen Zweck hervorragend geeignet und bieten ein Maximum an Gesundheitsschutz. Solche Atemschutzhauben werden üblicherweise von der Umgebungsluft unabhängig druckluftgespeist. Dazu wird Druckluft zunächst in aller Regel einem Luftaufbereitungssystem, das als erstes ein einstufiges oder ein mehrstufiges Filtersystem umfasst, zugeführt. Die gefilterte Luft wird dann über einen Druckluftschlauch einem Taillenband bzw. Hüftgurt zugeführt, das in der Regel mit mindestens einem weiteren Luftaufbereitungsmodul ausgestattet ist. Ein Luftaufbereitungsmodul kann ein Aktivkohleabsorber sein, ein anderes Luftaufbereitungsmodul kann ein Lufterwärmer oder ein Luftbefeuchter sein. Mit Hilfe des Aktivkohleabsorbermoduls können unerwünschte Dämpfe und Gase entfernt werden, die noch in der Druckluft enthalten sein können. Und durch ein Luftwärmermodul und / oder einem Luftbefeuchtermodul können weitere Vorteile für die Gesundheit und das Wohlbefinden erreicht werden. Eine weitere vorteilhafte Ausführungsform besteht darin, ein Luftregel- und verteilermodul auf dem Taillenband bzw. Hüftgurt zu befestigen. Das gesamte Gebilde wird üblicherweise als Gurteinheit bezeichnet. Eine derartige vorteilhafte Gurteinheit ist zur Verwendung bei einer Atemschutzhaube mit dem Produktnamen "Vision 2000" der SATA GmbH & Co. KG bekannt. Eine weitere Gurteinheit, die eine Regulierung der Luftzufuhr ermöglicht und ebenfalls am Befestigungspunkt schwenkbar gebracht ist, ist aus WO 01/97914 A1 bekannt.

Heutzutage stellen die Anwender von Atemschutzsystemen erhöhte Anforderungen an die Gewährleistung von Gesundheitsschutz sowie an die Benutzerfreundlichkeit. Andererseits möchten die Hersteller und Zulieferer Produkte, die möglichst einfach produzierbar, leicht montierbar und falls erforderlich, wieder leicht demontierbar sind.

### Aufgabe der Erfindung

Aufgabe der Erfindung ist es, eine Möglichkeit aufzuzeigen, wie die zuvor genannten Probleme gelöst werden können.

### Lösung der Aufgabe der Erfindung

Diese Aufgabe wird von einer Befestigungseinheit mit den Merkmalen des Anspruchs 1 gelöst. Die erfindungsgemäße Befestigungseinheit ermöglicht eine einfache und sichere Montage und Demontage unterschiedlicher Module, die insbesondere zur Verbesserung der Versorgung eines Benutzers einer Atemschutzmaske oder Atemschutzhaube mit Atemluft bestimmt sind.

Weitere Einzelheiten und Ausgestaltungen der Erfindung sind aus den Unteransprüchen und den nachfolgend beschriebenen Zeichnungen ersichtlich.

Die Befestigungseinheit nach der Erfindung dient zum leichten Befestigen und späteren Abnehmen eines Luftaufbereitungsmoduls insbesondere am bzw. von einem Taillenband bzw. Hüftgurt, der von einem Handwerker wie z.B. einem Lackierer in einer Lackierkabine getragen wird und der eine fremdbelüftete Atemschutzmaske oder Atemschutzhaube trägt.

### Kurze Beschreibung der Zeichnungen

Die beigefügten Zeichnungen bilden einen Teil der vorliegenden Beschreibung und werden zum weiteren Verständnis der vorliegenden Erfindung bereitgestellt. Sie veranschaulichen mögliche Ausführungsformen der vorliegenden Erfindung und dienen dazu, die Prinzipien der vorliegenden Erfindung zusammen mit der Beschreibung zu erläutern. In den beigefügten Zeichnungen sind gleiche Bauteile mit den gleichen Bezugszeichen bezeichnet.

In den Zeichnungen ist dargestellt:
Fig. 1A und 1B Ansichten einer globalen Befestigungseinheit nach der vorliegenden Erfindung,
Fig. 2A und 2B Explosionsansichten dieser Befestigungseinheit,
Fig. 3 eine Montageanleitung dieser Befestigungseinheit mit einer Luftreguliereinheit,
Fig. 4A und 4B Zusammenbauzeichnungen der Befestigungseinheit mit der Luftreguliereinheit,
Fig. 5A bis 5E rotierende Diagramme für den Zusammenbau nach Fig. 4A in Kombination mit einem Hüftgurt,
Fig. 6 eine Montageanleitung für die Montage des Gebildes nach Fig. 4A und 5A - 5E an dem Hüftgurt,
Fig. 7A veranschaulicht den vorderen Teil einer Luftreguliereinheit, welche mit einer Befestigungseinheit nach der Erfindung verbunden werden kann,
Fig. 7B veranschaulicht die Rückseite dieser Luftreguliereinheit,
Fig. 8A zeigt die Montagezeichnung dieser Luftreguliereinheit,
Fig. 8B veranschaulicht eine weitere Ansicht der Montagezeichnung,
Fig. 9A veranschaulicht die Befestigungseinheit dieses Luftregulierungseinheit,
Fig. 9B zeigt eine andere Ansicht dieser Befestigungseinheit,
Fig. 10 zeigt die Ansicht der Befestigung der Befestigungseinheit mit der Luftregulierungseinheit auf einem Hüftgurt
   und
Fig. 11 zeigt die Ansicht des Abnehmens der Befestigungseinheit mit der Luftregulierungseinheit vom Hüftgurt.

### Ausführliche Beschreibung der Ausführungsformen

Die folgende detaillierte Beschreibung ist unter Bezugnahme auf die Zeichnungen zu verstehen, die einen Teil der Beschreibung bilden und eine beispielhafte Darstellung der Möglichkeiten aufzeigen, welche die Erfindung bietet. In den Zeichnungen sind Richtungsangaben wie oben, unten, innen und außen mit Bezug auf die beschriebenen Zeichnungen zu verstehen. Komponenten der Ausführungsformen der Erfindung können in mehreren unterschiedlichen Richtungen angeordnet sein, so dass die Richtungsangaben nur zur Veranschaulichung verwendet werden und dadurch keine Grenzen implizieren sein sollen. Die Beschreibung sollte auch so verstanden werden, dass anderen Ausführungsformen gewählt werden können und strukturelle oder logische Veränderungen basieren auf der Prämisse, dass sie entsprechend dem Umfang der Erfindung gestattet sind. Deshalb sollte die folgende detaillierte Beschreibung nicht als Einschränkung zu verstehen sein. Es versteht sich, dass Merkmale der verschiedenen hier beschriebenen Ausführungsformen können miteinander kombiniert werden können, wenn es keine speziellen anderes lautenden Anmerkungen gibt.

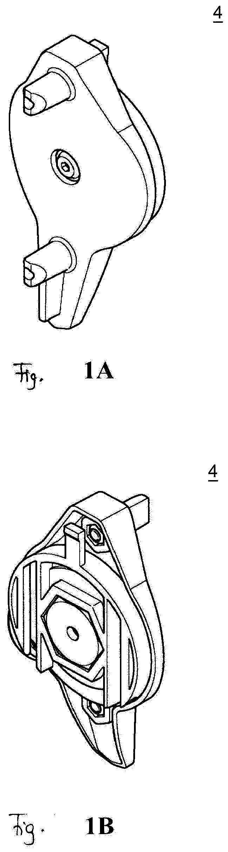

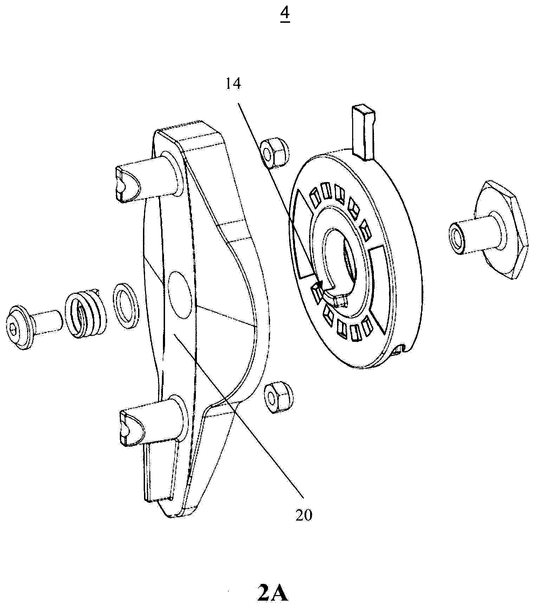

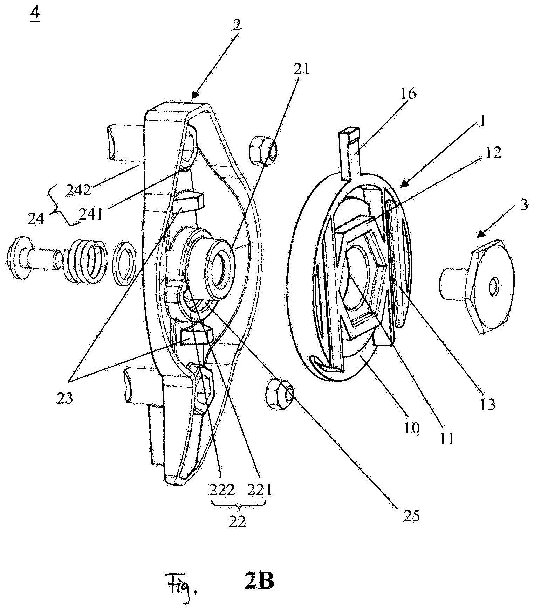

Wie in den Fign. 1A und 1B und Fig. 2A und 2B gezeigt, besitzt die Befestigungseinheit 4 gemäß der Erfindung eine erste Teilkomponente 1, eine zweite Teilkomponente 2, eine erste Schraube 3 mit einem ersten Kopfteil und einem ersten hohlen Schraubenfortsatz, eine Feder und eine zweite Schraube mit einen zweiten Kopfteil und einer zweiten Schraubenfortsatz.

Die erste Teilkomponente 1 hat eine im Wesentlichen zylindrische Kontur und umfasst, wie in den Fign. 2A und 2B gezeigt, ein erstes Substrat 10 mit einer ersten Oberfläche und einer zweiten Oberfläche gegenüber der ersten Oberfläche. Ein zentrales Durchgangsloch 11 durchdringt das erste Substrat 10. Ein sechseckiger Rahmen 12 ist rund um das zentrale Durchgangsloch 11 und auf der ersten Oberfläche angeordnet. Ein Anschlag 14 und auf der zweiten Oberfläche angeordnete Verriegelungsrillen sowie ein nach außen gerichteter Vorsprung 13 und16 definieren die erste Teilkomponente 1.

Wie die Fig. 2A und 2B weiter zeigen, umfasst die zweite Teilkomponente 2 ein zweites Substrat 20 mit einer ersten Oberfläche und einer zweiten Oberfläche gegenüberliegend zu der ersten Oberfläche. Ein erster hohler Vorsprung 21 steht von der ersten Fläche vor und durchdringt das zweite Substrat 20. Daneben gibt es einen zweiten Vorsprung 22, dessen Durchmesser größer ist als derjenige des ersten Vorsprungs 21, dessen Höhe aber kleiner ist als diejenige des ersten Vorsprungs 21, wobei der zweite Vorsprung 22 den ersten Vorsprung 21 umgibt. Dem Vorsprung 21 sind zwei Verriegelungsstifte 23 zugeordnet, die in die Verriegelungsrillen der ersten Teilkomponente 1 eingreifen können, um die zweite Teilkomponente 2 in einer bestimmten Eingriffsstellung zu verriegeln. Ein Befestigungsteil 24 kann in ein Befestigungsloch eines Moduls, wie z.B. eines Luftaufbereitungsmoduls, eingeführt werden, zur gemeinsamen Befestigung an einem anderen Bauteil oder Gegenstand.

Ferner, wie in Fig. 2A und 2B gezeigt, weist der zweite Vorsprung 22 einen ersten Abschnitt 221 und einen zweiten Abschnitt 222 auf, wobei eine innere Umfangswand des ersten Abschnitts 221 an einer äußeren peripheren Wand des ersten Vorsprungs 21 und eine innere Umfangswand des zweiten Teils 222 und eine äußere Umfangswand des ersten Vorsprungs 21 eine Führungsrille 25 zur Aufnahme eines Anschlags 14 definieren. Der erste Abschnitt 221, der zweite Abschnitt 222, der erste Vorsprung 21 und der Anschlag 14 sind so aufeinander abgestimmt, dass die zweite Teilkomponente 2 um einen Winkel, der einem vorbestimmten Winkel relativ zur ersten Teilkomponente ist, verdreht werden kann, wobei der vorbestimmte Winkel kleiner als 180 Grad ist.

Wie in den Fign. 1A, 1B und Fig. 2A, 2B angedeutet, wird die erste Schraube 3 nacheinander in die zentrale Durchgangsbohrung 11 und einen hohlen Teil des ersten Vorsprungs 21 von einer Seite, wo sich die erste Teilkomponente 1 befindet, gesteckt. Die Feder, in der die zweite Schraube eingesetzt, wird sequentiell in einem zusammengebauten hohlen Teil des ersten Vorsprungs 21 von einer Seite eingebracht, wo die zweite Teilkomponente 2 angeordnet ist, so dass der erste hohle Schraubenfortsatz der ersten Schraube 3 den zweiten hohlen Schraubenfortsatz der zweiten Schraube empfängt und die Feder den ersten Schraubenfortsatz der ersten Schraube 3 umhüllt. Zusätzlich kann auch eine Dichtung zwischen dem Kopfteil der ersten Schraube 3 und der Feder vorgesehen werden. Die erste Teilkomponente 1 und die zweite Teilkomponente 2 werden in einer solchen Weise zusammengesetzt, dass der Anschlag 14 der ersten Teilkomponente 1 in der Führungsnut 25 der zweiten Teilkomponente 2 aufgenommen wird und die Verriegelungsstifte 23 der zweiten Teilkomponente 2 in den Verriegelungsrillen der ersten Teilkomponente 1 gesperrt sind.

Darüber hinaus sind, wie in der Abb. 2A gezeigt, jeweils fünf Verriegelungsrillen in der oberen Seite der zweiten Oberfläche des ersten Substrats 10 ausgebildet, und jeweils fünf Verriegelungsrillen sind in der unteren Seite der zweiten Oberfläche des ersten Substrats 10 ausgebildet und symmetrisch um eine zentrale Achse des zentralen Durchgangslochs 11 angeordnet. Außerdem sind die fünf Verriegelungsrillen in der unteren Seite entsprechend der Führungsnut 25 der zweiten Teilkomponente 2 auf einen in von der zweiten Oberfläche definierten Peripheriebereich abgestimmt.

Bei der Befestigungseinheit 4 mit der oben erwähnten Konfiguration kann die zweite Teilkomponente 2 gedreht werden, und wenn die Verriegelungsstifte 23 der zweiten Teilkomponente 2 mit den Verriegelungsrillen der ersten Teilkomponente 1 durch Ausdehnung der Feder zusammenwirken. Die Verriegelungsstifte 23 der zweiten Teilkomponente 2 können in anderen Verriegelungsrillen eingreifen, und es kann erreicht werden, dass die zweite Teilkomponente 2 gegenüber der ersten Teilkomponente 1 in mehreren Positionen einrastet. Darüber hinaus ist die innere Umfangswand des ersten Abschnitts 221 des zweiten Vorsprungs 22 in der Nähe der äußeren peripheren Wand des ersten Vorsprungs 21 und die Führungsrille 25 ist zwischen der Innenumfangswand des zweiten Abschnitts 222 und der äußeren Umfangs gebildeten Wand des ersten Vorsprungs 21, sodass der Anschlag 14 der ersten Teilkomponente 1 in der Führungsrille 25 beweglich ist, und der drehbare Winkelbereich der zweiten Teilkomponente 2 ist im Verhältnis zu der ersten Teilkomponente 1 begrenzt, wodurch das zusätzliche Modul an der Befestigungseinheit 4 daran gehindert wird, in eine unerwünschten Position gedreht zu werden.

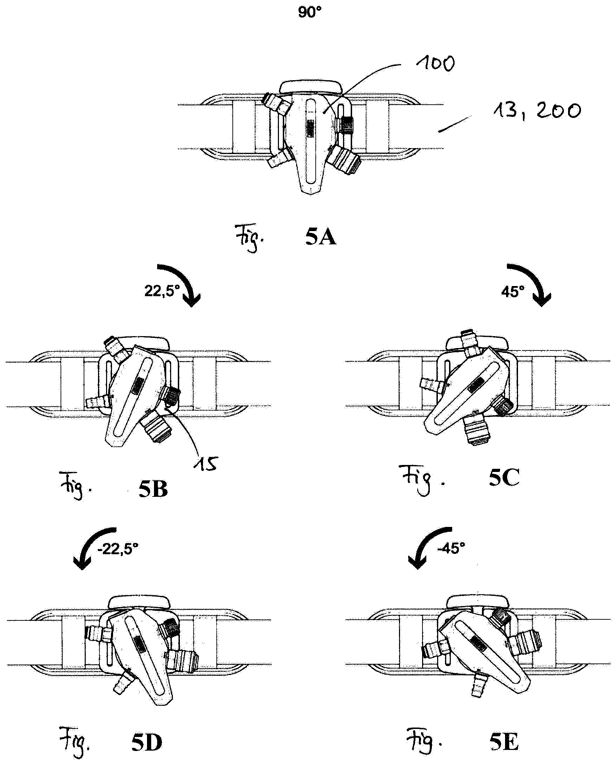

Wie oben erwähnt, sind die fünf Paare von symmetrischen Verriegelungsrillen in der ersten Teilkomponente 1 ausgebildet, so dass die zweite Teilkomponente 2 fünf Eingriffspositionen gegenüber dem ersten Teilkomponente 1 hat. Wie in den Figuren 5A bis 5E gezeigt ist, kann die zweite Teilkomponente um 22,5 Grad, -22.5 Grad, 45 Grad und -45 Grad relativ zu der ersten Teilkomponente gedreht und an den entsprechenden Positionen in Eingriff gebracht werden.

Dabei besitzt, wie in Fig. 2A und 2B gezeigt, das Befestigungsteil 24 einen dritten hohlen Abschnitt 241 und einen vierten hohlen Abschnitt 242, wobei der dritte Abschnitt 241 auf der gleichen Fläche wie der erste Vorsprung 21 positioniert ist. Am zweiten Substrat 20 ist der vierte Abschnitt 242 auf der Oberfläche dem ersten Vorsprung 21 des zweiten Substrats 20 gegenüberliegend positioniert.

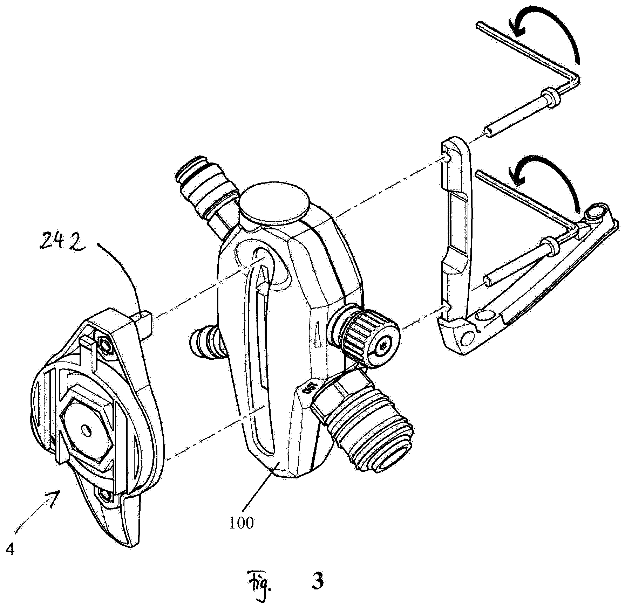

Ferner, wie die Fig. 2A und 2B und Fig. 3 weiter zeigen, ist der vierte Abschnitt 242 in ein Befestigungsloch einer Luftreguliereinheit 100, die als Zusatzmodul verwendet wird, einführbar. Eine Schraube ist in einen Teil des vierten hohlen Abschnitts 242 und einen hohlen Teil des dritten Abschnitts 241 von einer Seite eingeschoben, wobei die Luftreguliereinheit 100 von der Seite, wo sich die zweite Teilkomponente 2 mit der Mutter befindet, sodass die Befestigungseinheit 4 und die Luftreguliereinheit 100 wie in den 4A und 4B dargestellt aneinander fixiert werden.

Darüber hinaus, wie in Fig. 2B gezeigt, hat der dritte Abschnitt 241 einen sechseckigen Umriss, so dass die Mutter entsprechend dem dritten Abschnitt 241 ausgebildet sein und einen sechseckigen Umriss aufweisen kann.

Alternativ kann, obwohl nicht gezeigt, die zweite Teilkomponente mindestens ein Befestigungsloch zur Aufnahme eines Befestigungsmittels des Zusatzmoduls aufweisen, wobei das mindestens eine Befestigungsloch das zweite Substrat vorzugsweise durchdringt.

Ferner kann, wie in Fig. 2B gezeigt, das Kopfteil der ersten Schraube 3 einen sechseckigen Querschnitt in Anpassung an den sechseckigen Umriss des Rahmens 12 haben, so dass das sechseckige Kopfteil der ersten Schraube 3 in den Rahmen 12 gedrückt werden kann.

Alternativ, obwohl nicht gezeigt, kann das Kopfteil der zweiten Schraube einen kreisförmigen Außenumriss haben, der dem sechseckigen Innenumriss des Rahmens 12 angepasst ist.

Die Befestigungseinheit 4 ist bevorzugt aus Kunststoff hergestellt.

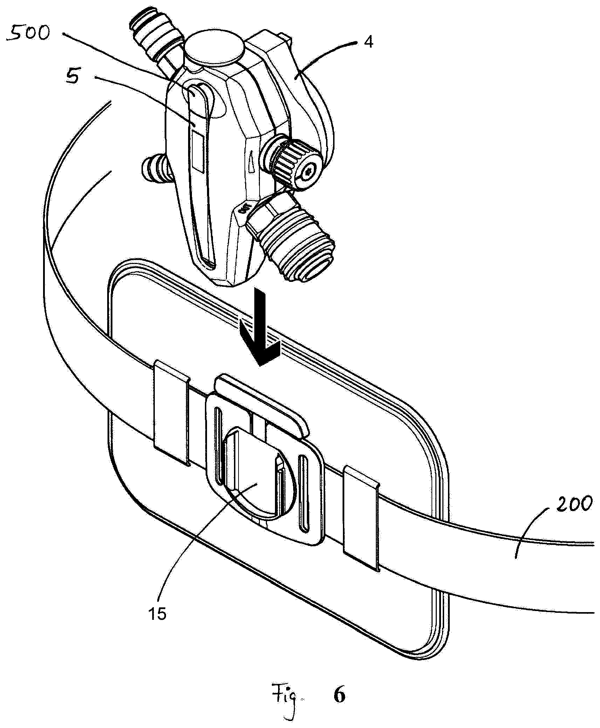

Die Befestigungseinheit 4 kann hervorragend zum Fixieren der Luftreguliereinheit 100 oder einer anderen Einheit bzw. eines anderen Moduls an einem Taillenband bzw. Hüftgurt 200 verwendet werden. Wie in Fig. 6 angedeutet, kann die Luftreguliereinheit 100 mit der Befestigungseinheit 4 an einem Adapter 15 des Hüftgurts 200 durch Aufschieben von oben befestigt werden. Die Vorsprünge 13, 16 auf der ersten Teilkomponente 1 der Befestigungseinheit 4 gleiten dann entlang des Adapters 15; und wenn ein Vorsprung auf der ersten Teilkomponente gegen einen Handgriff auf dem Adapter 15 drückt, wird dadurch die Aufwärts- und Abwärtsbewegung der Luftreguliereinheit 100 begrenzt.

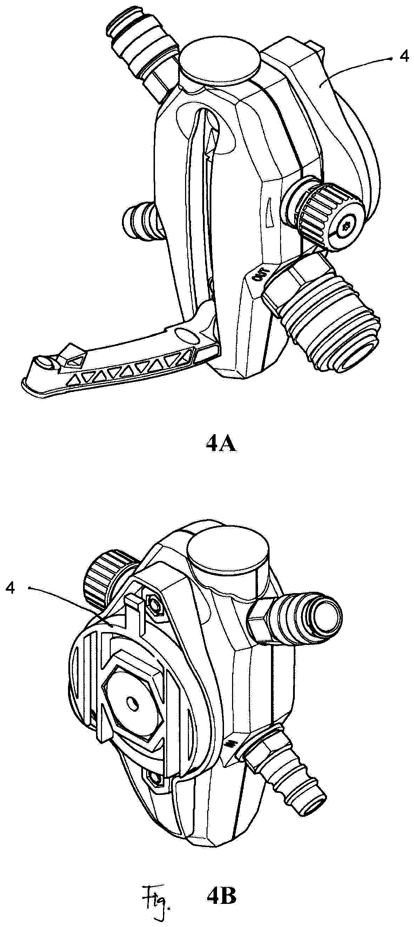

Sämtliche vorstehenden Erläuterungen beziehen sich auf das Ausführungsbeispiel nach den Figuren 1 bis 6.

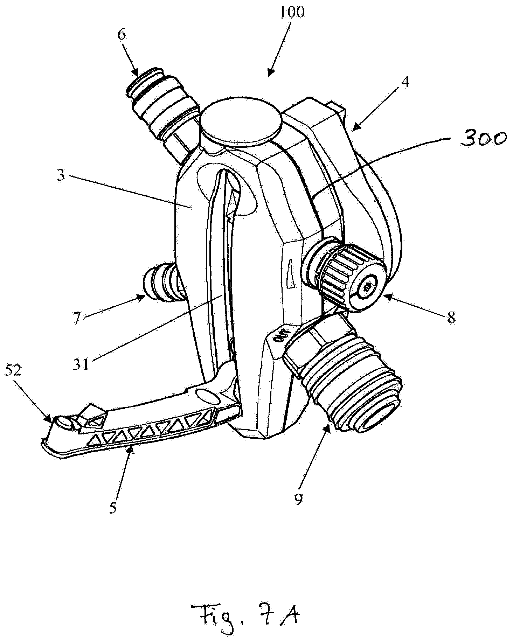

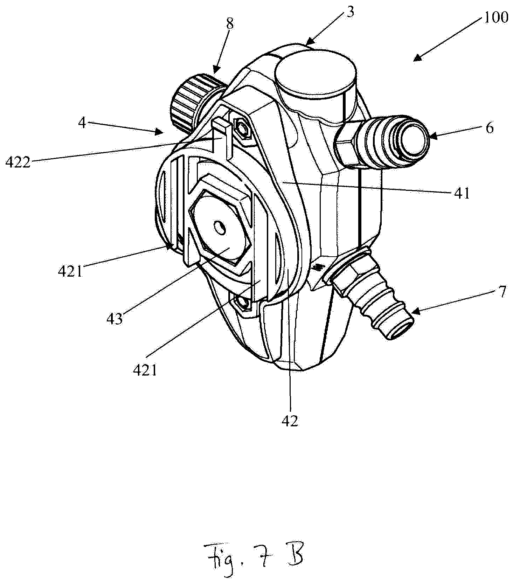

Nachstehend soll die Erfindung anhand der Figuren 7 bis 11 nochmals anhand einer weiteren Beschreibung der Befestigungseinheit 4, die wieder mit einer Luftreguliereinheit 100 kombiniert ist, näher beschrieben werden.

Die Luftreguliereinheit 100 nach Fig. 7 ff. umfasst eine erste Halbschale und eine zweite Halbschale, welche das Gehäuse der Luftreguliereinheit 100 bilden. Die Halbschalen sind entlang einer Nahtlinie 300 miteinander verbunden. Die Verbindung kann eine lösbare oder eine unlösbare Verbindung sein. Klips-, Klebe oder Schweißverbindungen sind möglich. Eine Befestigungseinheit 4, die verwendet wird, um die Luftreguliereinheit 100 an einem Hüftgurt 200 zu montieren, ist mit der ersten Halbschale des Gehäuses verbunden. Die Verbindung kann eine lösbare oder eine unlösbare Verbindung sein. Im vorliegenden Ausführungsbeispiel ist die Halbschale lösbar mit der Befestigungseinheit 4 verbunden.

Die Luftreguliereinheit 100 ist mit einem Lufteinlassverbinder 7 ausgestattet, über den Druckluft von einer externen Druckuftversorgung in die Luftreguliereinheit 100 eingeführt werden kann. Ein Verbinder 6 für einen Schlauch oder dergleichen, welcher zu einer Atemschutzmaske oder -haube führt, ist auf der gleichen Seite des Gehäuses wie der Lufteinlassverbinder 7, jedoch oberhalb von diesem Lufteinlassverbinder 7 angeordnet. Weiterhin ist ein Anschluss 9 auf der anderen Seite der Luftreguliereinheit 100 angeordnet, der zur Ausgabe der Druckluft über einen Schlauch oder dergleichen zu einem druckluftbetriebenen Handwerkzeug wie einer Farbspritzpistole führt. Auf der gleichen Seite wie dieser Anschluss 9, jedoch oberhalb von diesem, befindet sich ein Regler 8, der dazu dient, um den Druck der Luft einstellen zu können, der zur Atemschutzmaske oder -haube führt. Aus Sicherheitsgründen ist der Regler 8 derart konfiguriert, dass die Luftreguliereinheit 100 stets Luft mit einem vorbestimmten Druck an die Atemschutzmaske oder -haube liefert, selbst wenn der Regler 8 auf "minimal" eingestellt wird.

Der Verbinder 6 für den Anschluss mit der Atemschutzmaske oder -haube und / oder der Anschluss 9 für die Spritzpistole können bei Nichtverwendung der Luftreguliereinheit 100 durch einen Blinddeckel oder dergleichen verschlossen werden, wenn gewünscht.

Vorzugsweise kann die Luftreguliereinheit 100 mit einer Druckanzeige verbunden werden (in den Figuren nicht dargestellt).

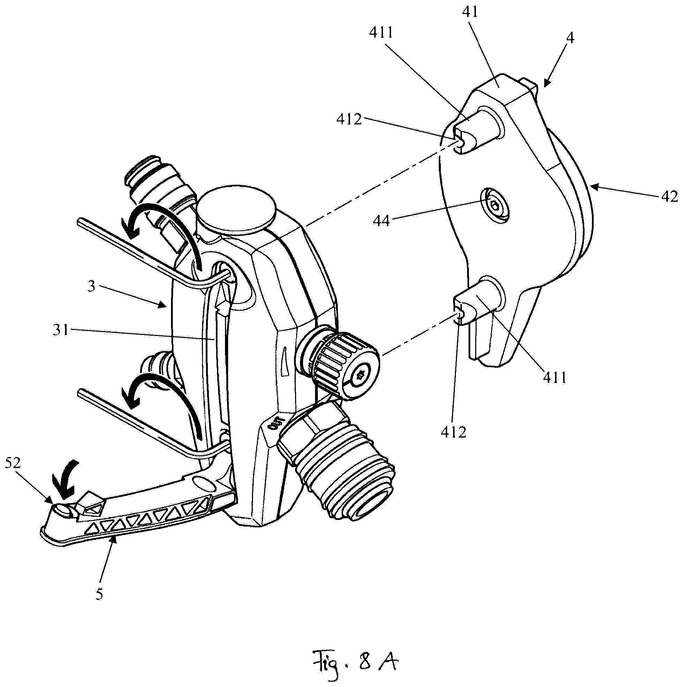

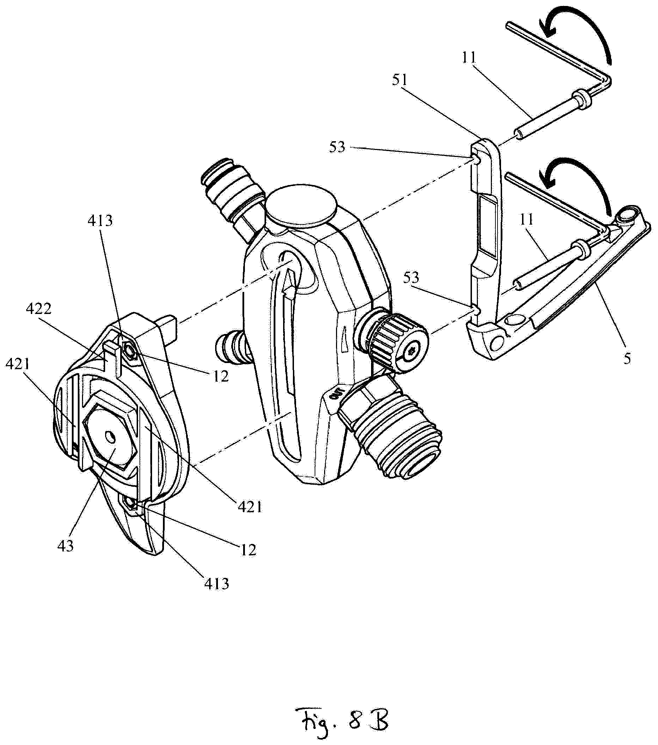

In einer bevorzugten Ausführungsform, die in den wie in den Fig. 7A, 8A und 8B näher gezeigt ist, ist die zweite Halbschale der Luftreguliereinheit 100 mit einem abklappbaren bzw. drehbaren Halter 5 versehen, an dem die Spritzpistole oder der Atemluftschlauch gehalten werden kann, wenn die Spritzpistole oder die Atemschutzmaske oder -haube das nicht benutzt wird. Wie in Fig. 8B gezeigt, ist ein erster Arm des hier zweiarmig ausgebildeten Halters 5 an der Luftreguliereinheit 100 mittels einer Schraube 11 befestigt. Der andere, zweite Arm des Halters 5 ist gelenkig mit dem ersten Arm verbunden und steht ansonsten frei. Es kann gegenüber der Luftreguliereinheit 100 verdreht werden.

Wie in Fig. 8A angedeutet, kann der zweite Arm des Halters 5 in einem Winkel zwischen 20 ° bis 90 ° gedreht werden, vorzugsweise in einem Winkel von 70 °. Ferner ist ein erstes Verriegelungselement 52, vorzugsweise ein Magnet, am freien Ende des zweiten Arms des Halters 5 vorgesehen. Das Verriegelungselement 52 wirkt mit einem zweiten Verriegelungselement (vorzugsweise mit einem Magnet) zusammen, das an der Luftreguliereinheit 100 vorgesehen ist. Im vorliegenden Ausführungsbeispiel ist das zweite Verriegelungselement am Halter 5 im Bereich eines Plattensitzes 51 befestigt, welcher am oberen nicht freien Ende des ersten Armes des Halters 5 vorgesehen ist. Zusammenfassend kann der Halter 5 in eingeklappter Stellung bei Nichtgebrauch sicher an der Luftreguliereinheit 100 gehalten werden. Und vorzugsweise ist, wie in den Fig.7A und 7A gezeigt ist, eine vertiefte Nut 31 in die zweite Halbschale des Gehäuses eingelassen. Die Nut 31 ist maßlich derart auf den Halter 5 abgestimmt, dass der zweite Arm in eingeklappter Stellung bündig in der Nut 31 liegt, bis auf eine Handhabe 500 am oberen Ende.

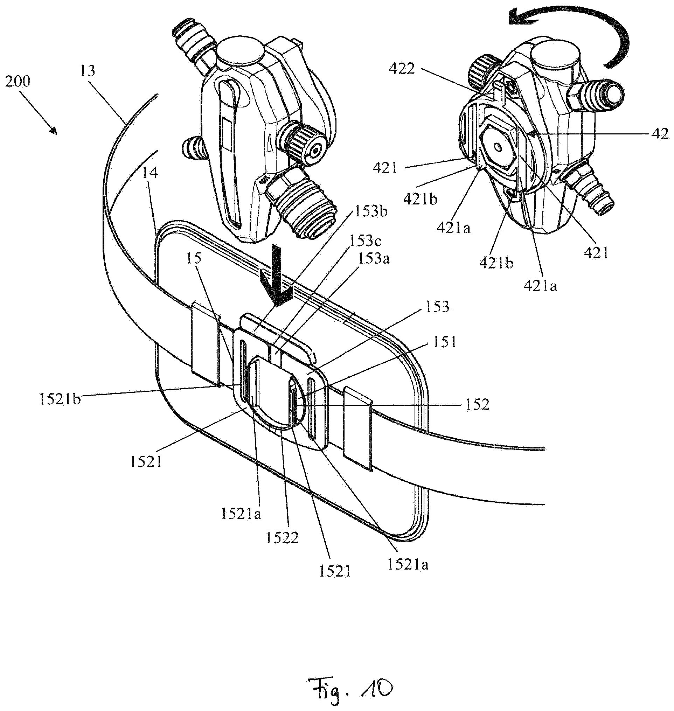

Die Fig. 8A und 8B veranschaulichen jeweils die Befestigungseinheit 4 der Luftreguliereinheit 100 in Vorderansicht und Rückansicht. Die Befestigungseinheit 4 umfasst Verbindungselemente 41, 42, die dazu geeignet sind, um die erste Halbschale des Gehäuses der Luftreguliereinheit 100 mit einem Adapter 15 zu verbinden, der zu einem Hüftgurt 200 gehört (s. Fig. 10).

Wie in den Fig. 8A und 8 B gezeigt, besitzt das im vorliegenden Ausführungsbeispiel im Wesentlichen oval gestaltete erste Verbindungselement 41 der Befestigungseinheit 4 zwei hohle Vorsprünge 411, die oben und unten am Verbindungselement 41 angeordnet sind und die in Richtung der ersten Halbschale des Gehäuses der Luftreguliereinheit vorstehen. Eine Befestigungsbohrung 412 ist in jeden Vorsprung 411 eingelassen. Die erste Halbschale weist entsprechende Befestigungslöcher auf, in welche die Vorsprünge 411 eingesetzt werden können. Wie in Fig. 8B weiter gezeigt, werden Schrauben 11 verwendet, welche durch die oben und unten am ersten Arm des Halters 5 befindlichen Plattensitze 51 durch dort eingelassene Befestigungslöcher 53 greifen, und anschließend durch Befestigungslöcher in der ersten Halbschale und in der zweiten Halbschale des Gehäuses der Luftreguliereinheit 100. An den Vorsprüngen 411 ist die Befestigungseinheit 4 mittels Bolzen 12 befestigt. Um eine besonders sichere Befestigung erhalten, sind Bolzensitze 413 für Schrauben oder dergleichen vorgesehen.

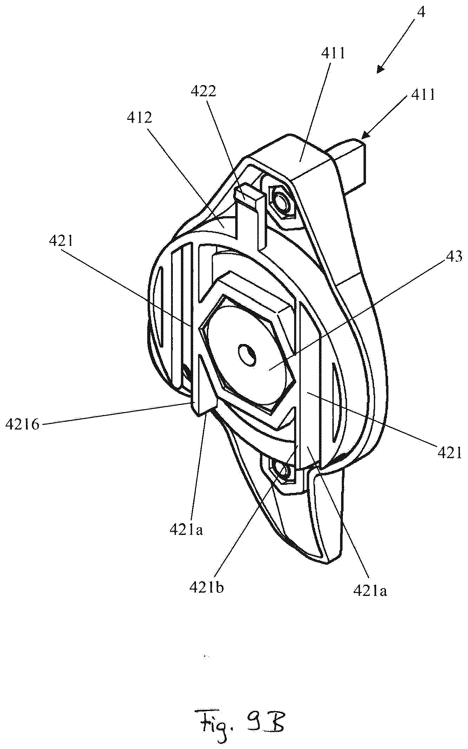

Wie in Fig. 9B gezeigt ist, sind zwei Gleitschlitze 421 an dem Adapterbereich 42 des Befestigungselements 4 vorgesehen. Der Adapterbereich 42 ist im Umriss kreisrund. Ein Anschlagkontakt 422 steht von der Umfangsfläche des Adapterbereichs 42 von der Oberseite des Adapterbereichs 42 ab. Zwei parallele Vorsprünge 421b, die nahe der Mitte des Adapterbereichs 42 von der Kreisfläche vorstehen, stellen jeweils die Oberseite einer Innenwand 421a für einen der beiden Gleitschlitze 421. Hierüber kann die Verbindung zwischen der Luftreguliereinheit 100 mit einem Hüftgurt 200 auf erfindungsgemäße Weise bewerkstelligt werden.

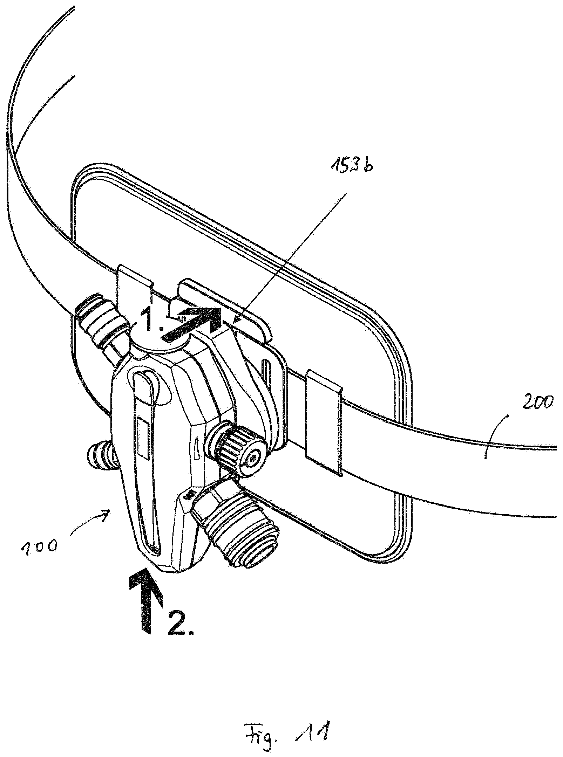

Der in den Fig. 10 und 11 angedeutete Hüftgurt 200 umfasst ein Taillenband 13, das an seiner Innenseite mit einem Polster 14 ausgestattet ist. An seiner Außenseite ist das Taillenband 13 mit einem Adapter 15 für die Befestigungseinheit 4 der Luftreguliereinheit 100 ausgestattet.

Der Adapter 15 weist eine Trägerplatte 151, durch die Trägerplatte 151 abgestützte eine Befestigungsplatte 152 und einen Freigabemechanismus 153 auf. An dem Adapter 15 sind zwei Führungsschienen 1521 vorgesehen, die in Lage und Form auf die zwei Gleitschlitze 421 an dem Adapterbereich 42 der Befestigungseinheit 4 abgestimmt sind. Ein Anschlagelement 1522 verbindet die beiden Führungsschienen 1521 an ihren unteren Enden; der Anschlag 1522 und die beiden Führungsschienen 1521 bilden somit im Wesentlichen eine "U"-Form. Jede Führungsschiene 1521 umfasst eine Rippe 1521a, die von der Befestigungsplatte 152 vorsteht. Die beiden Rippen 1521a sind an der Befestigungsplatte 152 entlang der Längsrichtung des Taillenbandes 13 angeordnet und verlaufen entlang der Breitenrichtung des Taillenbandes 13 parallel zueinander. Der obere Teil jeder Rippe 1521a ist mit einem Vorsprung 1521b ausgestattet, der nach außen in der Längsrichtung des Taillenbandes vorsteht. Jeder Vorsprung 1521 b definiert an der Befestigungsplatte 152 eine Führung bzw. Klammer für die Gleitschlitze 421 an dem Adapterbereich 42 der Befestigungseinheit 4.

Der Freigabemechanismus 153 besitzt einen einarmigen Hebel 153a und einen Handgriff 153 b, der mit dem Hebel 153a verbunden ist. Wie in Fig. 10 gezeigt, liegt der Hebel 153a in einer Aussparung des oberen Teils der Befestigungsplatte 152. Der Hebel 153a ist aus einem relativ flexiblen Material hergestellt ist, weshalb er verformt werden kann, wenn Druck auf den Handgriff 153b ausgeübt wird. Im vorliegenden Ausführungsbeispiel ist der Hebel 153a einstückig mit der Befestigungsplatte 152 hergestellt und aus dieser Platte 152 herausgeschnitten. Der Griff 153b ist einstückig an dem oberen Ende des Hebels 153a angeformt. Die Oberfläche des Handgriff 153b ist im vorliegenden Ausführungsbeispiel größer als die Oberfläche des Hebels, wodurch eine Anschlagfläche 153c zwischen dem Handgriff 153b und dem Hebel 153a gebildet wird.

In Fig. 10 ist näher gezeigt, wie die Luftreguliereinheit 100 über den Adapterbereich 42 der Befestigungseinheit 4 am Hüftgurt 200 über dessen Adapter 15 befestigt und wieder davon gelöst werden kann. Die Führungsschienen 1521 der Befestigungsplatte 152 des Adapters 15 können nach entsprechendem Ausrichten durch einen nach unten gerichteten Druck, der durch Bewegen der Luftreguliereinheit 100 nach unten in Pfeilrichtung 1 (Fig.10) in die Gleitschlitze 421 des Adapterbereichs 42 der Befestigungseinheit 4 eingeführt werden. Da dann die Vorsprünge 421b der Gleitschlitze 421 und die Vorsprünge 1521b der Führungsschienen 1521 einandergreifen, ist die Luftreguliereinheit 100 sicher am Hüftgurt 200 befestigt. Das Anschlagelement 1522 an dem Adapter 15 beschränkt die Gleitbewegungen nach unten, so dass ein unerwünschtes Absinken der Luftreguliereinheit 100 verhindert wird. Das obere Ende des Anschlagkontakts 422 an der Befestigungseinheit 4 verhindert, dass die Anschlagfläche 153c des Freigabemechanismus 153 des Adapters 15 in unerwünschten Kontakt mit der der Luftreguliereinheit 100 kommt.

Wie in Fig. 11 gezeigt, kann das Entfernen der Luftreguliereinheit 100 vom Hüftgurt 200 auf einfache Weise bewirkt werden. Durch Inkontaktbringen des Anschlagkontakts 422 an der Befestigungseinheit 4 und der Anschlagfläche 153c des Hebels 153a durch Drücken des Griffs 153b in Pfeilrichtung 1 (Fig. 11), d.h. zum Träger des Hüftgurts 200 hin, wird der Freigabemechanismus 153 ausgelöst und die Luftreguliereinheit 100 kann durch Bewegen nach oben in Pfeilrichtung 2 (Fig. 11) abgenommen werden.

Obwohl die Ausführungsform lediglich ein Beispiel mit Gleitschlitzen 421 auf dem Adapterbereich 42 der Befestigungseinheit 4 und Führungsschienen 152 am Adapter 15 des Hüftgurts 200 beschreibt und zeigt, können andererseits Gleitschlitze an dem Adapter 15 und Führungsschienen an der Befestigungseinheit 4 vorgesehen werden. Auch andere Arten von Gleit- oder Schiebeverbindungen oder jede andere lösbare Verbindung wie beispielsweise Klips- oder Rastverbindungen sind möglich.

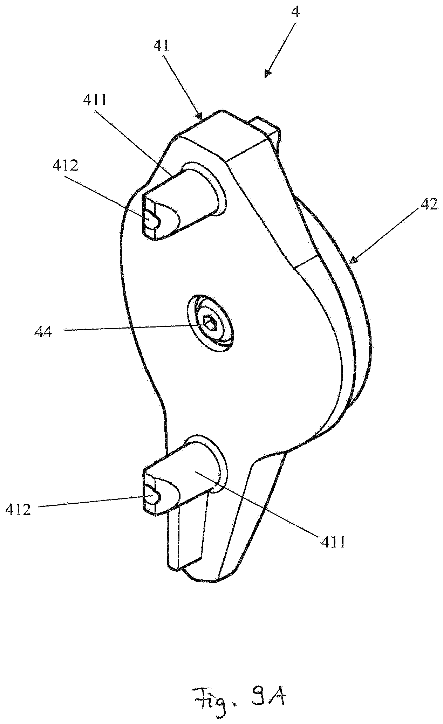

Wie in den Fig. 9A und 9B noch gezeigt ist, sind der Adapterbereich 42 und das Verbindungselement 41 der Befestigungseinheit 4 durch eine dünne Sechskantmutter 43 und eine Schraube 44 verbunden. Da der Adapterbereich 42 mit dem Verbindungselement 41 verbunden ist, können in Bezug zu drehen einander kann die Luftreguliereinheit 100 (oder ein anderes an der Befestigungseinheit 4 befestigte Modul) in Bezug auf den Hüftgurt 200 verdreht werden (s. Fig. 5A bis 5E des vorherigen Ausführungsbeispiels). Das trägt zu einer weiteren Komfortsteigerung für den Bediener bei.

Ferner ist, wie in den Fig. 7A und 7B gezeigt, die Luftreguliereinheit 100 mit einem Farbcodesystem-Scheibe (CCS-Disc) ausgestattet. Im vorliegenden Ausführungsbeispiel ist eine kreisrunde Vertiefung auf der Oberseite des Gehäuses der Luftreguliereinheit 100 eingelassen, in welche die ebenfalls kreisrunde Farbcodesystem-Scheibe eingeklipst werden kann.

Verschiedene Luftreguliereinheiten 100 können mit einer Farbcodesystem-Scheibe unterschiedlicher Farbe personalisiert werden. Oder es können dadurch auf einfache Weise verschiedene Luftreguliereinheiten verschiedenen Atemschutzmasken oder -hauben zugeordnet werden. Andere Befestigungsarten und Farbcodesystem-Formen sind selbstverständlich möglich.

Die Verwendung anderer Kennzeichen als Farbcodesystem-Scheiben ist selbstverständlich möglich. Mittels der Kennzeichen wird jedenfalls die Sicherheit von Atemschutzvorrichtungen weiter verbessert.

Bevorzugt sind alle Elemente oder Teilelemente der Luftreguliereinheit 100 aus Kunststoff hergestellt. In einer anderen möglichen Ausführungsform können die beiden Halbschalen des Gehäuses unterschiedliche Farben haben. Wenn die Farben der Halbschalen auf die Farben des Hüftgurts bzw. des Adapters 15 abgestimmt sind, können Montagefehler nahezu ausgeschlossen werden.

In weiterer Ausgestaltung der Erfindung ist der Hüftgurt an mehreren Stellen mit den erfindungsgemäßen Adaptern versehen. Dann können mehrere gleiche oder aber voneinander verschiedene Luftreinigungseinheiten wie Lufterwärmer, Luftbefeuchter oder Aktivkohleabsorbereinheiten, die mit einer erfindungsgemäßen Befestigungseinheit ausgestattet sind und/oder die im Gehäusebereich gleich oder ähnlich wie die zuvor beschriebene Luftreguliereinheit gestaltet sind, problemlos am Hüftgurt befestigt werden. Bevorzugt sollten zwei Stellen gewählt werden, die später an der linke Seite und der rechten Seite der Taille des Benutzers liegen, wenn das Taillenband von dem Benutzer getragen wird. Dann kann die Luftreinigungseinheiten von Benutzern von einer Seite zur anderen gewechselt werden, weshalb die Gurteinheit problemlos von Links- und Rechtshänder verwendet werden kann.

Abschließend sei nochmals betont, dass das Obige nur bevorzugte Ausführungsformen der vorliegenden Erfindung beschreibt, aber die vorliegende Erfindung nicht darauf einschränkt. Für den Fachmann auf dem Gebiet kann die vorliegende Erfindung verschiedene Abwandlungen und Änderungen haben. Alle Änderungen, äquivalente Substitutionen, Verbesserungen, die unter die Erfindung gemäß der Definition in den Ansprüchen fallen, sollten vom Schutzumfang abgedeckt werden.

## Patentansprüche

1. Luftreguliereinheit (100) mit einer Befestigungseinheit (4), die dazu ausgelegt ist, ein Modul gegenüber einem anderen Modul zu fixieren und eine erste Teilkomponente (1) zum Zusammenbau mit dem anderen Modul und eine zweite Teilkomponente (2) zum Zusammenbau mit dem Modul aufweist, wobei die zweite Teilkomponente (2) um einen vorbestimmten Winkel relativ zur ersten Teilkomponente (1) drehbar ist; und erste und zweite Unterkomponenten (10, 20) innerhalb des Bereichs des vorbestimmten Winkels in mehreren Positionen in gegenseitigem Eingriff stehen können, wobei die Luftreguliereinheit (100) weiterhin umfaßt:
- einen Lufteinlass-Anschluss (7), um Druckluft von einer Luftversorgungseinheit zu empfangen;
- einen Verbinder (6) zum Anschluss an eine Atemschutzmaske oder -haube,
- einen durch die erste Teilkomponente (1) gebildeten Adapterbereich (42), der auf einem Körper bzw. auf oder an einem Gehäuse der Luftreguliereinheit (100) befestigbar ist und in der Lage ist, eine lösbare Verbindung, insbesondere eine Schiebe- oder Gleitverbindung, mit einer anderen Komponente in Form eines Adapters (15) einzugehen, wobei das Gebilde aus Befestigungseinheit (4) und Gehäuse der Luftreguliereinheit (100) durch die relativ zueinander drehbaren Teilkomponenten (1, 2) konfiguriert ist, um sich zu drehen, so dass das Gehäuse der Luftreguliereinheit (100) konfiguriert ist, um an dem Adapter (15) in mehreren Positionen von Drehwinkeln in Eingriff gebracht zu werden.

2. Luftreguliereinheit (100) nach Anspruch 1, **dadurch gekennzeichnet, dass** der Adapterbereich (42) mit einem oder mehreren Gleitschlitzen (421) gleitend mit entsprechenden Führungsschienen (1521) des Adapters (15) verbunden werden kann, oder dass der Adapterbereich (42) mit einem oder mehreren Führungsschienen gleitend mit entsprechenden Gleitschlitzen des Adapters (15) verbunden werden kann, oder dass wenigstens ein Vorsprung (1521b) vorhanden ist, der umklammert werden kann bzw. umklammern kann.

3. Luftreguliereinheit (100) nach Anspruch 1, **dadurch gekennzeichnet, dass** der Adapterbereich (42) mit einem Anschlagkontakt (422) versehen ist, welcher einen Anschlagkontakt (153c) des Adapters (15) sperren kann, nachdem der Adapterbereich (42) gleitend mit dem Adapter (15) verbunden ist.

4. Luftreguliereinheit (100) nach Anspruch 1, **dadurch gekennzeichnet, dass** die Luftreguliereinheit (100) mit einem Halter (5) versehen ist.

5. Luftreguliereinheit (100) nach Anspruch 4, **dadurch gekennzeichnet, dass** der Halter (5) wenigstens bereichsweise gegenüber dem Gehäuse der Luftreguliereinheit (100) schwenkbar befestigt ist.

6. Luftreguliereinheit (100) nach Anspruch 5, **dadurch gekennzeichnet, dass** der Schwenkwinkel zwischen 20 Grad und 90 Grad liegt.

7. Luftreguliereinheit (100) nach Anspruch 6, **dadurch gekennzeichnet, dass** der Schwenkwinkel bei 70 Grad liegt.

8. Luftreguliereinheit (100) nach Anspruch 7, **dadurch gekennzeichnet, dass** ein Verriegelungselement (52) an einem freien Ende des Halters (5) festgelegt und ein korrespondierendes Verriegelungselement am Gehäuse der Luftreguliereinheit (100) festgelegt ist, so dass das freie Ende an dem Gehäuse der Luftreguliereinheit (100) verriegelt ist, wenn der Halter (5) zusammengeklappt ist.

9. Luftreguliereinheit (100) nach Anspruch 8, **dadurch gekennzeichnet, dass** die Verriegelungselemente Magneten sind.

10. Luftreguliereinheit (100) nach einem der Ansprüche 1 bis 9, **dadurch gekennzeichnet,**
**dass** die Luftreguliereinheit (100) mit einer Druckanzeige verbunden werden kann.

11. Luftreguliereinheit (100) nach einem der Ansprüche 1 bis 10, **dadurch gekennzeichnet, dass** Luftreguliereinheit (100) einen Anschluss (9) zur Verbindung mit einem druckluftbetriebenen Handwerkzeug wie einer Farbspritzpistole oder dergleichen aufweist.

12. Luftreguliereinheit (100) nach einem der Ansprüche 2 bis 11, **dadurch gekennzeichnet, dass** die Luftreguliereinheit (100) ein Kennzeichnungselement aufweist.

13. Luftreguliereinheit (100) nach einem der Ansprüche 2 bis 12, **dadurch gekennzeichnet, dass** das Gehäuse der Luftreguliereinheit (100) aus Kunststoff gefertigt ist.

14. Luftreguliereinheit (100) nach Anspruch 13, **dadurch gekennzeichnet, dass** das Gehäuse der Luftreguliereinheit (100) aus zwei Hälften zusammengesetzt ist.

15. Luftreguliereinheit (100) nach einem der Ansprüche 1 bis 14 und die Befestigungseinheit (4), in Kombination mit einer Gurteinheit (200).

## Claims

1. Air-regulating unit (100) having a fastening unit (4), which is designed to fix one module in relation to another module and has a first subcomponent (1) for assembly with the other module, and a second subcomponent (2) for assembly with the module, wherein the second subcomponent (2) can be rotated through a predetermined angle relative to the first subcomponent (1); and first and second subsidiary components (10, 20) can engage with one another in a plurality of positions within the range of the predetermined angle, wherein the air-regulating unit (100) furthermore comprises:
- an air-inlet port (7) for receiving compressed air from an air-supply unit;
- a connector (6) for connecting to a respiratory protection mask or hood,
- an adapter region (42), which is formed by the first subcomponent (1), can be fastened on a body or on or to a housing of the air-regulating unit (100) and is capable of establishing a releasable connection, in particular a sliding connection, with another component in the form of an adapter (15), wherein the structure consisting of the fastening unit (4) and housing of the air-regulating unit (100) is configured to rotate, by way of the subcomponents (1, 2) that can be rotated relative to one another, in such a manner that the housing of the air-regulating unit (100) is configured to be brought into engagement with the adapter (15) in a plurality of rotation-angle positions.

2. Air-regulating unit (100) according to Claim 1, **characterized in that** the adapter region (42), having one or more sliding slots (421), can be connected to corresponding guide rails (1521) of the adapter (15) in a sliding manner, or **in that** the adapter region (42), having one or more guide rails, can be connected to corresponding sliding slots of the adapter (15) in a sliding manner, or **in that** provision is made for at least one projection (1521b), which can be clasped or can perform a clasping action.

3. Air-regulating unit (100) according to Claim 1, **characterized in that** the adapter region (42) is provided with a stop contact (422), which can block a stop contact (153c) of the adapter (15) once the adapter region (42) has been connected to the adapter (15) in a sliding manner.

4. Air-regulating unit (100) according to Claim 1, **characterized in that** the air-regulating unit (100) is provided with a holder (5).

5. Air-regulating unit (100) according to Claim 4, **characterized in that** the holder (5) is fastened so as to be able to pivot, at least in certain regions, in relation to the housing of the air-regulating unit (100).

6. Air-regulating unit (100) according to Claim 5, **characterized in that** the pivot angle is between 20 degrees and 90 degrees.

7. Air-regulating unit (100) according to Claim 6, **characterized in that** the pivot angle is 70 degrees.

8. Air-regulating unit (100) according to Claim 7, **characterized in that** a locking element (52) is secured to a free end of the holder (5) and a corresponding locking element is secured to the housing of the air-regulating unit (100), with the result that the free end is locked to the housing of the air-regulating unit (100) when the holder (5) has been folded together.

9. Air-regulating unit (100) according to Claim 8, **characterized in that** the locking elements are magnets.

10. Air-regulating unit (100) according to any of Claims 1 to 9, **characterized in that** the air-regulating unit (100) can be connected to a pressure indicator.

11. Air-regulating unit (100) according to any of Claims 1 to 10, **characterized in that** the air-regulating unit (100) has a port (9) for connecting to a compressed-air-operated hand tool such as a paint-spraying gun or the like.

12. Air-regulating unit (100) according to any of Claims 2 to 11, **characterized in that** the air-regulating unit (100) has an identification element.

13. Air-regulating unit (100) according to any of Claims 2 to 12, **characterized in that** the housing of the air-regulating unit (100) is manufactured from plastic.

14. Air-regulating unit (100) according to Claim 13, **characterized in that** the housing of the air-regulating unit (100) is made up of two halves.

15. Air-regulating unit (100) according to any of Claims 1 to 14 and the fastening unit (4), in combination with a belt unit (200).

## Revendications

1. Unité de régulation d'air (100) dotée d'une unité de fixation (4) qui est conçue pour fixer un module par rapport à un autre module et présente un premier composant partiel (1) permettant l'assemblage à l'autre module et un deuxième composant partiel (2) permettant l'assemblage au module, le deuxième composant partiel (2) pouvant tourner par rapport au premier composant partiel (1) suivant un angle prédéfini ; et des premier et deuxième sous-composants (10, 20) pouvant être en prise réciproque dans plusieurs positions dans la plage de l'angle prédéfini, l'unité de régulation d'air (100) comprenant en outre :
- un raccord d'entré d'air (7), afin de recevoir de l'air comprimé en provenance d'une unité d'alimentation en air ;
- un connecteur (6) servant au raccordement à un masque ou une cagoule de protection respiratoire,
- une région d'adaptation (42) formée par le premier composant partiel (1), laquelle peut être fixée sur un corps respectivement sur un boîtier de l'unité de régulation d'air (100) ou au niveau de celui-ci et est en mesure de réaliser une connexion libérable, en particulier à coulissement ou à glissement, avec un autre composant sous la forme d'un adaptateur (15), la structure constituée de l'unité de fixation (4) et du boîtier de l'unité de régulation d'air (100) étant configurée au moyen des composant partiels (1,2) pouvant tourner l'un par rapport à l'autre, afin de tourner, de sorte que le boîtier de l'unité de régulation d'air (100) soit configuré pour être amené en prise au niveau de l'adaptateur (15) en plusieurs positions d'angles de rotation.

2. Unité de régulation d'air (100) selon la revendication 1, **caractérisée en ce que** la région d'adaptation (42) peut être connectée de manière glissante à des rails de guidage (1521) correspondants de l'adaptateur (15) à l'aide d'une ou plusieurs fentes de glissement (421), ou **en ce que** la région d'adaptation (42) peut être connectée de manière glissante à des fentes de glissement correspondantes de l'adaptateur (15) à l'aide d'un ou plusieurs rails de guidage, ou **en ce qu'**au moins une saillie (1521b) est présente, laquelle peut être enserrée ou peut enserrer.

3. Unité de régulation d'air (100) selon la revendication 1, **caractérisée en ce que** la région d'adaptation (42) est pourvue d'un contact de butée (422), lequel peut bloquer un contact de butée (153c) de l'adaptateur (15) après que la région d'adaptation (42) a été connectée de manière glissante à l'adaptateur (15).

4. Unité de régulation d'air (100) selon la revendication 1, **caractérisée en ce que** l'unité de régulation d'air (100) est pourvue d'un support (5).

5. Unité de régulation d'air (100) selon la revendication 4, **caractérisée en ce que** le support (5) est fixé de manière pivotante par rapport au boîtier de l'unité de régulation d'air (100) au moins dans certaines zones.

6. Unité de régulation d'air (100) selon la revendication 5, **caractérisée en ce que** l'angle de pivotement est compris entre 20 degrés et 90 degrés.

7. Unité de régulation d'air (100) selon la revendication 6, **caractérisée en ce que** l'angle de pivotement est de 70 degrés.

8. Unité de régulation d'air (100) selon la revendication 7, **caractérisée en ce qu'**un élément de verrouillage (52) est fixé à une extrémité libre du support (5) et un élément de verrouillage correspondant est fixé au boîtier de l'unité de régulation d'air (100), de telle sorte que l'extrémité libre soit verrouillée sur le boîtier de l'unité de régulation d'air (100) lorsque le support (5) est replié.

9. Unité de régulation d'air (100) selon la revendication 8, **caractérisée en ce que** les éléments de verrouillage sont des aimants.

10. Unité de régulation d'air (100) selon l'une des revendications 1 à 9, **caractérisée en ce que** l'unité de régulation d'air (100) peut être connectée à un indicateur de pression.

11. Unité de régulation d'air (100) selon l'une des revendications 1 à 10, **caractérisée en ce que** l'unité de régulation d'air (100) présente un raccord (9) servant à la connexion à un outil à main pneumatique tel qu'un pistolet pulvérisateur à peinture ou similaire.

12. Unité de régulation d'air (100) selon l'une des revendications 2 à 11, **caractérisée en ce que** l'unité de régulation d'air (100) présente un élément d'identification.

13. Unité de régulation d'air (100) selon l'une des revendications 2 à 12, **caractérisée en ce que** le boîtier de l'unité de régulation d'air (100) est fabriqué en matière synthétique.

14. Unité de régulation d'air (100) selon la revendication 13, **caractérisée en ce que** le boîtier de l'unité de régulation d'air (100) est composé de deux moitiés.

15. Unité de régulation d'air (100) selon l'une des revendications 1 à 14 et l'unité de fixation (4), en combinaison avec une unité de ceinture (200).
